# EUROPÄISCHE PATENTSCHRIFT

(11) **EP 1 378 529 B1**
(45) Veröffentlichungstag und Bekanntmachung des Hinweises auf die Patenterteilung: **29.03.2006**
(21) Anmeldenummer: 03013996.8
(22) Anmeldetag: 20.06.2003
(51) Int. Cl.: C08G 18/09, C08G 18/79

(54) **Verfahren zur Herstellung monomerenarmer TDI-Trimerisate**
Process for producing TDI-trimers having a low monomer content
Procédé de production de trimères de TDI à faible teneur en monomères

(30) Priorität: 03.07.2002 DE 10229780
(43) Veröffentlichungstag der Anmeldung: 07.01.2004
(73) Patentinhaber: Bayer MaterialScience AG, 51368 Leverkusen (DE)
(72) Erfinder: Brahm, Martin, Dr., 51519 Odenthal (DE); Simon, Joachim, Dr., 40589 Düsseldorf (DE); Wilmes, Oswald, Dr., 51061 Köln (DE); Walloschek, Jürgen, Dr., 53819 Neunkirchen (DE)

(56) Entgegenhaltungen:
- EP-A- 0 416 338
- DE-A- 2 551 634
- FR-A- 2 301 585

## Beschreibung

Die Erfindung betrifft ein neues Verfahren zur Herstellung monomerenarmer Trimerisate auf Basis 2,4- und 2,6-Diisocyanatotoluol (TDI) und deren Verwendung in Beschichtungsmitteln.

Die Herstellung Isocyanuratgruppen enthaltender Polyisocyanate ist seit langem bekannt und in einer Vielzahl von Veröffentlichungen und Patenten beschrieben (Houben-Weyl, Methoden der organischen Chemie Band 8, S. 136f, Georg Thieme Verlag Stuttgart 1952; H. Wagner, H. F. Sarx, Lackkunstharze 5. Auflage, Seite 153ff, Carl Hanser Verlag München 1971; DE-A 4 428 107, US-PS 2 993 870; DE-C 1 201 992; DE-A 2 452 532; J. prakt. Chem. 336, S. 185 bis 200, 1994). Sowohl Trimerisate auf Basis aliphatischer als auch aromatischer Diisocyanate werden universell als Lackrohstoffe sowie als Polyurethanelastomere und Polyurethanschäume eingesetzt.

Aus arbeitshygienischer Sicht werden als Produkte monomerenarme Trimerisat-Typen bevorzugt. Hergestellt werden diese Produkte entweder durch destillatives Abtrennen des überschüssigen Monomers nach erfolgter Trimerisationsreaktion oder durch Steuerung der Trimerisationsreaktion zu entsprechend hohen Umsätzen, bis das Monomer weitestgehend sich zu höheroligomeren Isocyanuraten umgesetzt hat. Letzteres Verfahren führt besonders dann zum Erfolg, wenn die eingesetzten Diisocyanate - wie im Falle von 2,4-Toluylendiisocyanat - zwei deutlich unterschiedlich reaktive Isocyanatgruppen tragen. Entsprechende Lösemittel enthaltende Produkte können so mit einem Gehalt an monomerem TDI (Summe der isomeren Toluylendiisocyanate) von < 0,5 % hergestellt werden (z.B. Desmodur® IL, Verkaufsprodukt der Bayer AG, 50 %-ig in Butylacetat, NCO-Gehalt: 8,0 %).

Durch die Verschärfung der Kennzeichnung TDI-basierter Produkte ist das Interesse an weitgehend monomerenfreien Typen, d.h. Produkten mit TDI-Gehalten von <0,1 Gew.-%, stark in den Vordergrund gerückt. Um dies zu erreichen sollten die Ausgangsrohstoffe TDI-basierter Lacksysteme deutlich kleiner < 0,5 Gew.-% TDI vorzugsweise < 0,1 Gew.-% enthalten.

Prinzipiell lässt sich dieses Ziel in einfacher Weise durch weitergehende Trimerisation zu noch höheren Umsätzen und somit noch höheren Molekulargewichten erreichen. Dies erhöht jedoch die Viskosität, zum anderen führt dies zu Produkten mit immer weniger reaktiven Isocyanatzentren. Weiterhin wird so in zunehmendem Maße die Verträglichkeit bei der Abmischung mit anderen Lackrohstoffen ungünstig beeinflusst.

Es hat auch nicht an Anstrengungen gefehlt auf andere Wege den Gehalt an Monomer zu reduzieren. Die Verwendung von Nicht-Lösungsmitteln für Trimerisate zur Gleichgewichtsverschiebung werden z.B. in JP-A 56059828 beschrieben. Destillationsverfahren für "gedünnschichtete TDI-Trimerisate" (z.B. DE-A 3 420 923, DE-A 19 618 230) beziehungsweise Verfahren, die eine Vor- oder Nachbehandlungsstufe - wie beispielsweise Nachurethanisierung - einsetzen, werden in der Literatur beschrieben (DE-A 3 928 503, US-A 3 384 624, DE-A 2 414 413, DE-A 19 523 657,). Selbst besonders schonende Verfahren zur selektiven Trimerisation bei tiefen Temperaturen werden diskutiert (JP-A 63 260 915). Alle beschriebenen Methoden führen jedoch zu sehr komplexen, oft mehrstufigen technischen Verfahren, sind mit sehr langen Reaktionszeiten und damit schlechter Raum/Zeitausbeute verbunden, bzw. sind aus dem Laborstadium in die Technik nicht übertragbar.

In der EP-A 0 416 338 wird eine katalytische Trimerisation von TDI in Lacklösemitteln unter anderem mit Mannichbasen beschrieben. Der hier als essentiell und notwendig beschriebene Zusatz von Alkoholen führt jedoch zur Bildung von Urethangruppen, die einen starken Co-katalytischen Einfluss auf die Trimerisationsreaktion ausüben und so die zur Erzielung niedriger TDI-Gehalte notwendige Selektivität zerstören. Analog hierzu werden Kombinationen aus Alkoholen und anderen Katalysatorsystemen beschrieben (z.B. US-A 5,905,151). Es konnten jedoch keine Produkte mit Monomerengehalt von < 0,1 % erhalten werden.

Die DE-A 2 452 532 beschreibt unter anderem ebenfalls die Trimerisation von TDI mit Mannichbasen. Erfindungswesentlich ist hierbei ein Zusatz von Carbamidsäureestem, der bei hohen Temperaturen zur Desaktivierung des Katalysatorsystems führt und somit ein "Durchgehen der Reaktion" verhindert. Es werden jedoch nur hoch monomerenhaltige Produkte erhalten und keine weitgehend monomerenfreien TDI-Trimerisat-Typen.

Die DE-A 2551634 beschreibt ein Verfahren zur Trimerisierung von TDI mit Mannichbasen bei maximal 60°C.

Es war daher Aufgabe der vorliegenden Erfindung, ein einfaches Verfahren zur Herstellung weitgehend monomerenfreier TDI-Trimerisat-Lösungen ohne zusätzliche Verfahrensschritte bzw. ohne eine physikalische Abtrennung von monomerem TDI bereitzustellen.

Diese Aufgabe konnte mit dem nachstehend näher beschriebenen erfindungsgemäßen Verfahren gelöst werden.

Gegenstand der Erfindung ist ein Verfahren zur Herstellung Lösemittel und/oder Verdünnungsmittel und Isocyanuratgruppen enthaltender Polyisocyanate auf Basis 2,4- und/oder 2,6-Diisocyanatotoluol mit einem Gehalt an monomerem Diisocyanat von < 0,1 Gew.-%, dadurch gekennzeichnet, dass in einer Mischung aus
A) 20 bis 80 Gew.-% Diisocyanatkomonente enthaltend mindestens 80 Gew.% 2,4- und/oder 2,6-Diisocyanatotoluol und
B) 20 bis 80 Gew.-% Lösemitteln und/oder Verdünnungsmitteln sowie
C) Dialkylaminomethylgruppen enthaltenden phenolischen Katalysatoren bei einer Temperatur von 70 bis 120°C in Abwesenheit von aliphatischen Hydroxylgruppen und Urethangruppen eine katalytische Trimerisationsreaktion durchgeführt wird und anschließend, gegebenenfalls durch Abstoppung mit Katalysatorgiften, die Reaktion beendet wird.

Vorzugsweise werden mit dem erfindungsgemäßen Verfahren Isocyanuratgruppen enthaltende Polyisocyanat-Lösungen mit < 0,10 % freiem TDI, und bevorzugt mir < 0,05 % freiem TDI hergestellt.

Als Diisocyanatkomponente A) werden erfindungsgemäß 2,4-Diisocyanatotoluol und/oder 2,6-Diisocyanatotoluol eingesetzt, die gegebenenfalls bis zu 20 Gew.-%, vorzugsweise bis zu 10 Gew.%, andere Isocyanatgruppen aufweisende Verbindungen enthalten können. Sie können rein oder in Mischung miteinander eingesetzt werden.

Mischungen von 2,4- und 2,6-Diisocyanatotoluol als Diisocyanatkomponente A) werden vorzugsweise im Gewichtsverhältnis 3:2 bis 9:1 eingesetzt.

Neben 2,4- und/oder 2,6-Diisocyanatotoluol als Isocyanatkomponente A) können gegebenenfalls noch

Monoisocyanate mit aliphatisch, cycloaliphatisch, araliphatisch oder aromatisch gebundenen Isocyanatgruppen wie z.B. Stearylisocyanat, Naphthylisocyanat,

Diisocyanate mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan (IMCI), Bis-(isocyanatomethyl)-norbornan, 2,4'- und 4,4'-Diisocyanatodiphenylmethan und höhere Homologe, 1,5-Diisocyanatonaphthalin, Dipropylenglycoldiisocyanat,

Triisocyanate und/oder höherfunktioneller Isocyanate wie z.B. 4-Isocyanatomethyl-1,8-octandiisocyanat (Nonantriisocyanat), 1,6,11-Undecantriisocyanat

oder beliebige Gemische solcher Isocyanatverbindungen und sogenannte modifizierte Isocyanatverbindungen die sich aus den oben erwähnten Diisocyanaten und Triisocyanaten ableiten und durch Oligomerisierungsreaktionen wie beispielsweise Trimerisation hergestellt werden, enthalten sein.

Vorzugsweise wird ein Gemisch aus 2,4- und 2,6-Toluylendiisocyanat eingesetzt.

Als Lösemittel B) können in der Polyurethanchemie gebräuchliche Verdünnungsmittel und Lösemittel wie beispielsweise Toluol, Xylol, Cyclohexan, Chlorbenzol, Butylacetat, Ethylacetat, Ethylglykolacetat, Pentylacetat, Hexylacetat, Methoxypropylacetat, Tetrahydrofuran, Dioxan, Aceton, N-Methylpyrrolidon, Methylethylketon, Testbenzin, höher substituierte Aromaten, wie beispielsweise unter der Bezeichnung Solvent Naphtha®, Solvesso®, Shellsol®, Isopar®, Nappar® und Diasol® im Handel, Schwerbenzol, Tetralin, Dekalin und Alkane mit mehr als 6 Kohlenstoffatomen, übliche Weichmacher, wie Phthalate, Sulfonsäureester und Phosphorsäureester sowie Gemische derartiger Verdünnungs- und Lösungsmittel eingesetzt werden. Die Konzentration des Verdünnungs- und Lösemittels wird hierbei auf 20 bis 80Gew.-%, vorzugsweise 40 bis 60 Gew.-% eingestellt.

Ferner geeignet als Lösemittel B) sind auch Polyisocyanate auf Basis aliphatischer Diisocyanate wie sie z.B. in der DE-A 4 428 107 beschrieben sind. Hiermit sind verdünnte monomerenarme TDI-Trimerisate zugänglich, die keine leicht verdampfbaren Lösemittel und Verdünnungsmittel enthalten.

Als phenolische Katalysatoren C) zur Initiierung und Beschleunigung der Trimerisationsreaktion kommen spezielle Systeme mit sogenanntem negativem Temperatureffekt in Betracht, die auch bei höheren Temperaturen zu einem selektiven Einbau von TDI führen. Solche Katalysatorsysteme weisen an Aromaten gebundene N,N-Dialkylaminomethylgruppen und phenolische OH-Gruppen auf (Alkyl: unabhängig Alkylkette oder Alkylenkette mit bis 18 Kohlenstoffatome, die gegebenenfalls durch Sauerstoff oder Schwefel getrennt sind). Diese Gruppen können auf mehrere Moleküle verteilt, oder an einem oder mehreren benzolischen Aromaten positioniert sein. Vorzugweise werden Verbindungen als Katalysatorsysteme eingesetzt, die sowohl Hydroxyl- als auch Dialkylaminomethlyguppen in einem Molekül enthalten. Besonders bevorzugt werden Systeme eingesetzt, deren Dialkylaminomethylgruppen (Alkyl = C₁ bis C₃-Kette) in ortho-Stellung zu aromatischen Hydroxylgruppen positioniert sind. Als Beispiele seien folgende Mannichbasen genannt, wie sie z.B. auf Basis von Phenol, p-Isononylphenol oder Bisphenol A zum Beispiel durch Umsetzung von 188 Gewichtsteilen Phenol mit 720 Teilen einer 25 %igen wässrigen Dimethylamin-Lösung und 425 Gewichtsteilen 40 %iger Formaldehyd-Lösung durch zweistündiges Erhitzen auf 80°C, Abtrennen der wässrigen Phasen und Destillation der organischen Phase bei 90°C/10 Torr nach der DE-A 2 452 531 9 erhalten werden.

Die erfindungsgemäße Trimerisationsreaktion wird bei den für die Trimerisation von aromatischen Isocyanaten unüblichen hohen Temperaturen von 70 bis 120°C vorzugsweise 70 bis 110°C und besonders bevorzugt 75 bis 90°C ausgeführt.

Die erfindungsgemäße Trimerisationsreaktion wird in Abwesenheit von Alkohol mit aliphatischen Hydroxylgruppen und gegebenenfalls daraus entstehenden Urethangruppen durchgeführt, um eine vorteilhafte Selektivitätserhöhung bei hoher Temperatur zu erreichen.

Die Katalysatoren C) werden als Reinsubstanz oder gelöst gegebenenfalls in mehreren kleinen Portionen eingesetzt. Insgesamt werden für die Herstellung 0,003 bis 2,0 Gew.-% vorzugsweise 0,01 bis 0,5 Gew.-% an aktivem Katalysator verwendet.

Die Reaktionsdauer liegt im allgemeinen zwischen 1 und 100 Stunden, vorzugsweise 10 und 25 Stunden.

Bevorzugt wird die Trimerisationsreaktion am Ende durch Zugabe eines Katalysatorgiftes wie Protonensäuren; Säurechloride oder methylierenden Verbindungen wie z.B. Toluolsulfonsäuremethylester abgestoppt.

Überraschenderweise wird beim erfindungsgemäßen Verfahren der Einsatz der spezifizierten Katalysatoren C) bei der Trimerisation von TDI in dem erfindungsgemäßen Temperaturbereich ein entgegen die allgemeinen Lehre bekannter Effekt beobachtet, der bei höherer Temperatur zu einem selektiveren Einbau von Monomer führt. Überraschenderweise gelingt mit dem erfindungsgemäßen Verfahren auch bei Einsatz von 2,6-TDI die Herstellung von weitgehend monomerenfreien TDI-Trimerisat-Lösungen.

Weiterhin kann nach beendeter Trimerisationsreaktion noch eine weitere Modifizierung des Reaktionsprodukts mit niedermolekularen oder/und polymeren Hydroxylgruppen enthaltenden Verbindungen erfolgen.

Die durch das erfindungsgemäße Verfahren hergestellten Polyisocyanate werden vorzugsweise zur Herstellung von unter dem Einfluss von Luftfeuchtigkeit aushärtbaren Beschichtungsmaterialien verwendet. Sie können ebenfalls in zur Herstellung von Haftvermittlern, Klebstoffen, Druckfarben, Dichtstoffen und Polyurethanfomikörper Verwendung finden. Besonders bevorzugt werden sie als Vernetzer in 2-Komponentensystemen mit an sich bekannten isocyanatreaktiven Verbindungen eingesetzt. Hierzu zählen beispielsweise hydroxyfunktionelle Polyether, -ester, -amide, -carbonate, -acrylate, -butadiene bzw. Mischtypen der genannten hydroxyfunktionellen Polymeren. Auch niedermolekulare Di- und Polyole, Di- und Trimerfettalkohole sowie aminofunktionelle Verbindungen können in 2K-Systemen Verwendung finden. Mit blockierten isocyanatreaktiven Verbindungen können auch Einkomponentensysteme formuliert werden, ebenso können die nach dem erfindungsgemäßen

Verfahren hergestellten Produkte auch in blockierter Form als oder in Beschichtungsmaterialien eingesetzt werden. Hierbei erfolgt die Trocknung bei höheren Temperaturen bis ca. 200°C.

Neben den erfindungsgemäßen Verfahrensprodukten können in den Beschichtungen auch andere Hilfs- und Zusatzmittel wie beispielsweise die üblichen Benetzungsmittel, Verlaufsmittel, Hautverhinderungsmittel, Antischaummittel, Lösungsmittel, Mattierungsmittel wie beispielsweise Kieselsäure, Aluminiumsilikate und hochsiedende Wachse, viskositätsregulierende Stoffe, Pigmente, Farbstoffe, UV-Absorber, Stabilisatoren gegen thermischen bzw. oxidativen Abbau eingesetzt werden.

Die erhaltenen Beschichtungsmaterialien können zur Beschichtung beliebiger Substrate wie beispielsweise Holz, Kunststoffe, Leder, Papier, Textilien, Glas, Keramik, Putz, Mauerwerk, Metalle oder Beton verwendet werden. Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Die aus den erfindungsgemäßen Produkten hergestellten Beschichtungen härten bei 20°C im allgemeinen während eines Zeitraums von einigen Minuten bis Stunden zu hochwertigen Überzügen aus. Die Härtung kann jedoch auch bei tieferen Temperaturen (bis -5°C) oder beschleunigt bei höheren Temperaturen bis 200°C erfolgen.

### Beispiele

Alle Angaben in "Teilen" und "%" beziehen sich auf das Gewicht. NCO-Gehalte wurden in dem Fachmann bekannter Weise durch Titration bestimmt.

### Vergleichsbeispiel 1

### (nicht erfindungsgemäß, weitgehende Nachstellung von Beispiel 1 aus EP-A 0416338)

In einer Rührapparatur wurden 375 g Desmodur® T80 (Gemisch aus 80 % 2,4-Diisocyanatotoluol und 20 % 2,6-Diisocyanatotoluol) bei 50°C mit 19,8 g 2-Ethylhexanol versetzt und so lange gerührt, bis sich ein NCO-Gehalt der Mischung von 44 % eingestellt hatte. Anschließend wurde mit 394 g Butylacetat verdünnt und mit 1,0 g Katalysatorlösung (40 %ige Xylol-Lösung der Mannichbase auf Basis Phenol/Dimethylamin) versetzt und gerührt. Nach 3, 8 und 12 Stunden wurde nochmals mit jeweils 0,7 g Katalysatorlösung nachkatalysiert und weitere 10 Stunden bei 50°C gerührt, bis der NCO-Gehalt auf 8,05 % abgesunken war. Zur Beendigung der Trimerisationsreaktion wurde das entstandene Produkt mit 1,0 g Toluolsulfonsäuremethylester versetzt und für eine Stunde auf 80°C erhitzt. Das Produkt hatte folgende Kenndaten:

| | |
|---|---|
| NCO-Gehalt: | 7,95 % |
| Festkörpergehalt: | 50 % |
| Viskosität bei 23°C: | 1250 mPas |
| freier TDI-Gehalt: | 0,35 % (bestimmt mittels GC) |

### Beispiel 1 (erfindungsgemäßes Verfahren)

In einer Rührapparatur wurden 500 g Butylacetat und 500 g 2,4-Diisocyanatotoluol bei 75°C mit 1,5 g Katalysatorlösung (Verdünnung (40 %ig in Butylacetat) einer 40 %igen Lösung einer Mannich-Base auf Basis Bisphenol A/Dimethylamin in Xylol) versetzt und gerührt. Nach 4, 8 und 12 Stunden wurde mit der halben Menge nachkatalysiert und weitere 10 Stunden bei 75°C gerührt, bis der NCO-Gehalt auf 8,1 % abgesunken war. Zur Beendigung der Trimerisationsreaktion wurde das entstandene Produkt mit der 1,5 fachen Gewichtsmenge (bezogen auf zugegebene Katalysatormenge) Toluolsulfonsäuremethylester versetzt und für eine Stunde auf 80°C erhitzt. Das Produkt hatte folgende Kenndaten:

| | |
|---|---|
| NCO-Gehalt: | 8,07 % |
| Festkörpergehalt: | 50 % |
| Viskosität bei 23°C: | 1300 mPas |
| freier TDI-Gehalt: | < 0,03 % (bestimmt mittels GC) |

### Beispiel 2 (erfindungsgemäßes Verfahren)

In einer Rührapparatur wurden 500 g Butylacetat und 500 g (1,35 val) Desmodur® T80 (80 % 2,4-Diisocyanatotoluol und 20 % 2,6-Diisocyanatotoluol) bei 80°C mit 1,34 g Katalysator (Verdünnung (40 %ig in Butylacetat) einer 40 %igen Lösung einer Mannich-Base auf Basis Bisphenol A/Dimethylamin in Xylol) versetzt und gerührt. Nach 3, 8, 10 und 14 Stunden wurden 30 % der Ausgangsmenge an Katalysator nachgesetzt und weitere 6 Stunden bei 80°C gerührt, bis der NCO-Gehalt auf 8,05 % abgesunken war. Zur Beendigung der Trimerisationsreaktion wurde das entstandene Produkt mit der 1,5 fachen Gewichtsmenge (bezogen auf zugegebene Katalysatormenge) Toluolsulfonsäuremethylester versetzt und für eine Stunde auf 80°C erhitzt. Das Produkt hatte folgende Kenndaten:

| | |
|---|---|
| NCO-Gehalt: | 8,02 % |
| Festkörpergehalt: | 50 % |
| Viskosität bei 23°C: | 1250 mPas |
| freier TDI-Gehalt: | 0,04 % (bestimmt mittels GC) |

## Patentansprüche

1. Verfahren zur Herstellung Lösemittel und/oder Verdünnungsmittel und Iso cyanuratgruppen enthaltender Polyisocyanate auf Basis 2,4- und/oder 2,6. Diisocyanatotoluol mit einem Gehalt an monomerem Diisocyanat von < 0,1 Gew.-% **dadurch gekennzeichnet, dass** in einer Mischung aus
A) 20 bis 80 Gew.-% Diisocyanatkomponente enthaltend mindestens 80 gew.-% 2,4-und/oder 2,6-Diisocyanatotoluol und
B) 20 bis 80 Gew.-% Lösemitteln und/oder Verdünnungsmitteln sowie
C) Dialkylaminomethylgruppen enthaltenden phenolischen Katalysatoren
bei einer Temperatur von 70°C bis 120°C in Abwesenheit von aliphatischen Hydroxylgruppen und Urethangruppen eine katalytische Trimerisationsreaktion durchgeführt wird und anschließend, gegebenenfalls durch Abstoppung mit Katalysatorgiften, die Reaktion beendet wird.

2. Verfahren nach Anspruch 1, **dadurch gekennzeichnet, dass** Katalysatoren eingesetzt werden, deren Dialkylaminomethylgruppen (Alkyl = C₁ bis C₃-Kette) und phenolische OH-Gruppen in einem Molekül positioniert sind.

3. Verfahren nach Anspruch 1, **dadurch gekennzeichnet, dass** Katalysatoren eingesetzt werden, die als Mannichbasen auf Basis von Phenol, p-Isononylphenol oder Bisphenol A durch Umsetzung mit Dimethylamin und Formaldehyd erhalten werden.

4. Verfahren nach Anspruch 1-3, **dadurch gekennzeichnet, dass** als Ausgangsdiisocyanat eine Mischung von 2,4- und/oder 2,6-Diisocyanatotoluol im Gewichtsverhältnis 3:2 bis 9:1 eingesetzt wird.

5. Verfahren nach Anspruch 1-3, **dadurch gekennzeichnet, dass** als Ausgangs diisocyanat 2,4- Diisocyanatotoluol eingesetzt wird.

## Claims

1. Process for preparing solvent-containing and/or diluent-containing polyisocyanates based on 2,4- and/or 2,6-diisocyanatotoluene which contain isocyanurate groups and < 0.1% by weight of monomeric diisocyanate **characterized in that** in a mixture of
A) from 20 to 80% by weight of diisocyanate component containing at least 80% by weight of 2,4- and/or 2,6-diisocyanatotoluene and
B) from 20 to 80% by weight of solvents and/or diluents and also
C) phenolic catalysts containing dialkylaminomethyl groups,
at a temperature from 70°C to 120°C in the absence of aliphatic hydroxyl groups and urethane groups a catalytic trimerization reaction is carried out and subsequently, where appropriate by stopping with catalyst poisons, the reaction is ended.

2. Process according to Claim 1, **characterized in that** catalysts are used whose dialkylaminomethyl groups (alkyl = C₁ to C₃ chain) and phenolic OH groups are positioned in one molecule.

3. Process according to Claim 1, **characterized in that** catalysts used which are obtained as Mannich bases based upon phenol, p-isononylphenol or bisphenol A by reaction with dimethylamine and formaldehyde.

4. Process according to Claim 1-3, **characterized in that** a mixture of 2,4-and/or 2,6-diisocyanatotoluene in a weight ratio of from 3:2 to 9:1 is used as starting diisocyanate.

5. Process according to Claim 1-3, **characterized in that** 2,4-diisocyanatotoluene is used as starting diisocyanate.

## Revendications

1. Procédé pour la préparation de polyisocyanates à groupes isocyanurate, à base de 2,4- et/ou 2,6-diisocyanatotoluènes, contenant des solvants et/ou diluants, à une teneur en diisocyanate monomère inférieure à 0,1 % en poids, **caractérisé en ce que**, dans un mélange de :
A) 20 à 80 % en poids d'un composant diisocyanate contenant au moins 80 % en poids de 2,4- et/ou 2,6-diisocyanatototuènes et
B) 20 à 80 % en poids de solvants et/ou diluants, et
C) des catalyseurs phénoliques contenant des groupes dialkylaminométhyle,
on procède à une température allant de 70 à 120°C, en l'absence de groupes hydroxy aliphatiques et de groupes uréthanne, à une réaction de trimérisation catalytique puis, le cas échéant par addition de poisons du catalyseur, on arrête la réaction.

2. Procédé selon la revendication 1, **caractérisé en ce que** l'on utilise des catalyseurs dont les groupes dialkylaminométhyle (alkyle = chaîne en C₁ à C₃) et les groupes OH phénoliques sont disposés dans une molécule.

3. Procédé selon la revendication 1, **caractérisé en ce que** l'on utilise des catalyseurs obtenus, à l'état de bases de Mannich, à partir du phénol, du p-isononylphénol ou du bisphénol A par réaction avec la diméthylamine et le formaldéhyde.

4. Procédé selon les revendications 1 à 3, **caractérisé en ce que** l'on utilise un diisocyanate de départ consistant en un mélange de 2,4-et/ou de 2,6-diisocyanatotoluènes à des proportions relatives de 3:2 à 9:1.

5. Procédé selon les revendications 1 à 5, **caractérisé en ce que** le diisocyanate de départ est le 2,4-diisocyanatotoluène.
